# EUROPEAN PATENT APPLICATION

(11) **EP 3 818 913 A1**
(43) Date of publication of application: **12.05.2021**
(21) Application number: 20205876.4
(22) Date of filing: 05.11.2020
(51) Int. Cl.: A47J 27/16, A47J 27/14, A47J 36/32, A47J 39/00

(54) **MULTI-FUNCTIONAL COOKING DEVICE AND FOOD CAPSULE**

(30) Priority: 05.11.2019 US 201962930664 P; 12.03.2020 CN 202010169384
(71) Applicant: Wei, Hong-Fan, Taipei City 11445 (TW)
(72) Inventor: Wei, Hong-Fan, Taipei City 11445 (TW)
(74) Representative: Viering, Jentschura & Partner mbB Patent- und Rechtsanwälte

(57) **Abstract**

A multi-functional cooking device (10, 10', 20) and a food capsule (105, 222, 30, 40) are provided. The multi-functional cooking device (10, 10', 20) integrates a plurality of cooking functions through circuits, structures, and software programs that are implemented by an embedded system. The multi-functional cooking device (10, 10', 20) includes a body formed with an accommodating space for disposing the food capsule (105, 222, 30, 40), a main body structure including a water storage component, an accommodating component, a water providing component, a heating component, a penetrating component, and one or more cooking tools (101, 103, 21, 22, 23, 24) disposed inside the body that cook food inside the food capsule (105, 222, 30, 40). The multi-functional cooking device (10, 10', 20) includes a circuit system implementing a plurality of cooking programs, the circuit system including a control circuit (501) for controlling the multi-functional cooking device (10, 10', 20), a control panel (109, 201) for providing a selection of the cooking programs, and functional components, e.g., a heater (504), a microwave emitter (505), a fan unit (506), a water spray unit (507), and a sealing unit (508).

## Description

### FIELD OF THE DISCLOSURE

The present disclosure relates to a cooking device, and more particularly to a multi-functional cooking device integrated with a variety of cooking techniques and a food capsule applied therein.

### BACKGROUND OF THE DISCLOSURE

With the advancement of technology and industrial and commercial development, people have the need to obtain food more efficiently and rapidly. Therefore, the fast-food industry has emerged, such that the food can be rapidly manufactured on the same production lines through normalizing ingredients and developing identical food manufacturing processes.

On the other hand, instant food packets that can be rapidly cooked are manufactured through packaging fully-cooked or semi-finished food ingredients along with condiments, and then packaged to be sold on a variety of channels. People can purchase instant food packets, bring the instant food packets home or to the office, and then heat the instant food packets via certain cooking machines before eating. For example, a microwave can be utilized to rapidly heat up instant food packets that are normalized and microwave applicable, and users can expeditiously obtain the instant food packets through setting cooking parameters, e.g., temperature and time, according to the instructions.

In addition to conventional machines, such as an oven, a rice cooker, and a pressure cooker, other methods can also be utilized to cook food within a short amount of time through cooking certain ingredients with suitable machines. For example, a superheated steam oven generating high temperature steam and an air fryer that utilizes a fan and a heater to generate high temperature air can be utilized to cook food expeditiously.

### SUMMARY OF THE DISCLOSURE

In response to the above-referenced technical inadequacies, the present disclosure provides a multi-functional cooking device and a food capsule.

The food capsule allows a user to cook and obtain food instantly through the multi-functional cooking device integrating cooking functions of a plurality of cooking devices, such that the cooking program that is preferred or suitable for selected ingredients can be selected from the multi-functional cooking device, so as to rapidly cook food.

The multi-functional cooking device integrates the cooking functions through circuits, structures, and an embedded system implementing a software program.

In one embodiment of the present disclosure, a main body structure of the multi-functional cooking device includes a water storage component, an accommodating component, a water providing component, a heating component, and a penetrating component. The water storage component is utilized to accommodate water, the accommodating component is utilized to carry or affix the food capsule, the penetrating component is a telescopic rod structure that is utilized to penetrate the food capsule, the water providing component provides water flowing into the food capsule through the penetrating component, and the heating component is utilized to heat up the water flowing through the water providing component.

One or more cooking tools are disposed inside the body of the multi-functional cooking device, which are utilized to cook the food inside the food capsule. A circuit system of the multi-functional cooking device includes functional components (i.e., the water storage component, the accommodating component, the water providing component, the heating component, and the penetrating component), and the circuit system includes a control circuit utilized to control the multi-functional cooking device to execute a plurality of cooking programs in the multi-functional cooking device, a memory unit which is a storage of the multi-functional cooking device, a control panel providing a selection of one or more default cooking programs, or providing a function of a plurality of user-programmable programs and storing the user-programmable cooking programs in the memory unit.

The circuit system of the multi-functional device further includes a heater heating up the food capsule through the one or more cooking tools penetrating inside the food capsule, according to a temperature of each of the cooking programs, a microwave emitter emitting microwaves scattering in the accommodating space to heat up the water in the food capsule, a fan unit blowing air at a high temperature inside the accommodating space to heat up the food in the food capsule, a water spray unit generating water vapor at a high temperature to heat up the food in the food capsule disposed in the accommodating space, and a sealing unit sealing the food capsule by a structural design and generating a pressure inside the accommodating space, so as to cook as a pressure cooker.

Preferably, the multi-functional cooking device implements cooking modes of the cooking programs through the circuits, the structures, and the embedded system, and the cooking modes include one of an oven mode, a microwave mode, a superheated steam oven mode, an air fryer mode, a pressure cooker mode, and a combination thereof.

Moreover, a program executing the cooking programs is stored in the memory unit, and the control circuit controlling the cooking programs includes setting a cooking mode, the control circuit obtaining a set of cooking parameters and the cooking program according to the cooking mode, the control circuit executing the cooking program according to the set of cooking parameters, activating the one or more cooking tools and corresponding ones of the water storage component, the accommodating component, the water providing component, the heating component, and the penetrating component in the circuit system, and controlling the one or more cooking tools and the functional components to cook the food capsule and concluding the cooking program.

In one embodiment, the accommodating space of the multi-functional cooking device has a multilayer structure including a first layer for disposing ingredients, a second layer having the food capsule disposed therein, and a third layer having a container disposed therein for receiving the food in the food capsule after being cooked, which is utilized to realize a plurality of steps in one of the cooking programs.

In addition, the food capsule can include a penetrable package made of heat resistive material in which food, ingredients, or condiments are disposed. A container is disposed in the accommodating space of the multi-functional cooking device when cooking, and the one or more cooking tools penetrate into the penetrable package and cook the food in the food capsule.

Furthermore, the food capsule includes food and an instant food packet, and the food is cooked through being heated once or through executing one of the cooking programs. On the other hand, the food capsule can be realized through encapsulating the food into a food capsule, and then the food capsule is mixed with other ingredients for cooking.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The present disclosure will become more fully understood from the following detailed description and accompanying drawings.
FIG. 1A is a schematic view of a multi-functional cooking device in one embodiment of the present disclosure.
FIG. 1B is a schematic view of a multi-functional cooking device in another embodiment of the present disclosure.
FIG. 2 is a schematic view of a multi-functional cooking device in yet another embodiment of the present disclosure.
FIG. 3 is a schematic view of a food capsule in one embodiment of the present disclosure.
FIG. 4 is a schematic view of a food capsule in another embodiment of the present disclosure.
FIG. 5 is a block diagram of functional components in one embodiment of the present disclosure.
FIG. 6 is a flowchart showing a method of operating the multi-functional cooking device in one embodiment of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

A multi-functional cooking device and a food capsule are provided in the present disclosure. The multi-functional cooking device and the food capsule that is applicable thereto provide a solution of cooking conveniently and obtaining food rapidly. The multi-functional cooking device integrates a plurality of functions (modes) of conventional cooking devices, e.g., an oven mode, a microwave mode, a superheated steam oven mode, an air fryer mode, a pressure cooker mode, etc., through circuits, structures, and software programs that are implemented by an embedded system. The multi-functional cooking device can realize a variety of food cooking processes according to a cooking program set by a user. For example, the food capsule that can be used by the user to cook and obtain food instantly is designed for the cooking programs of the multi-functional cooking device, such that the cooking program that is preferred or suitable for selected ingredients can be selected from the multi-functional cooking device, so as to cook food rapidly.

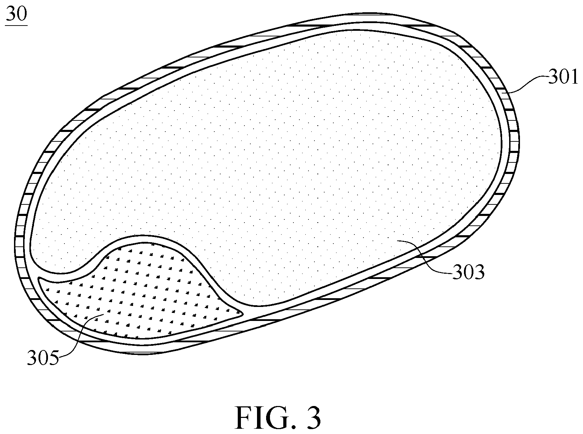

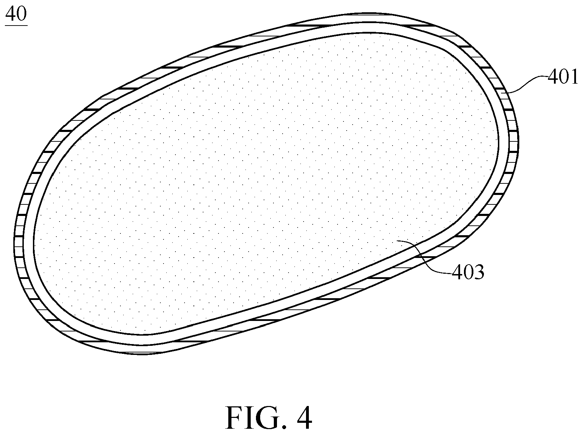

The food capsules provided in the present disclosure is a food filling technology encapsulating raw or cooked food. As shown in FIG. 3 and FIG. 4, the food capsules are usually encapsulated through vacuum packaging, and divided into two types: food capsules including a mixture of food and sauce pouches, where cooking can be concluded after being heated once, or after a certain cooking process; and food capsules including food only, with sauce pouches being encapsulated in separate food capsules, which can be heated or cooked separately, and then mixed with the food later. The multi-functional cooking device can utilize the food capsules and cook food properly according to user settings.

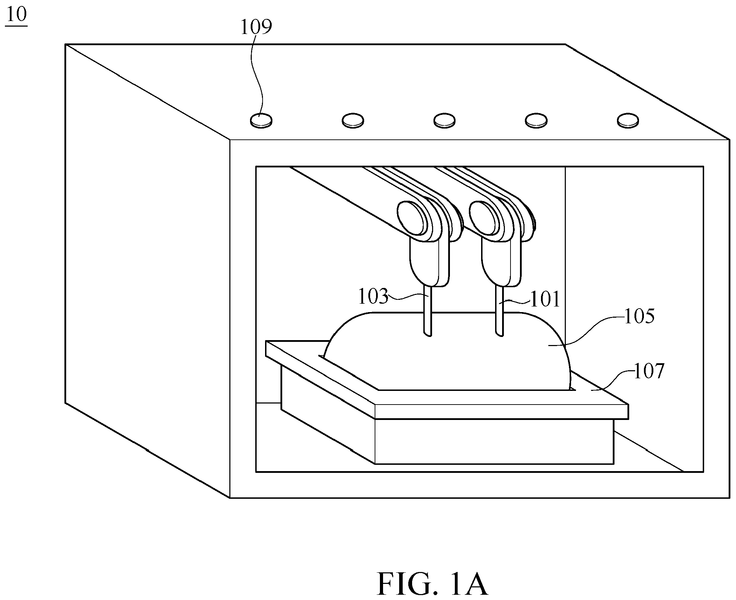

Reference is made to FIG. 1A, which is a schematic view of a multi-functional cooking device in one embodiment of the present disclosure. A body of the multi-functional cooking device 10 includes an accommodating space, and more preferably an enclosed space isolated from the external environment utilizing a cover. A shell of the multi-functional cooking device 10 includes the cover, and the design of the shell encompasses a structure that encloses the accommodating space. A body of the food capsule 105 that encapsulates food can be made of heat resistive material, and be disposed with a cover made of penetrable aluminum foil. On the other hand, the food capsule 105 can be a penetrable package, which is made of a recycled material. The food can be noodles, rice, oatmeal, etc. that are made of natural ingredients.

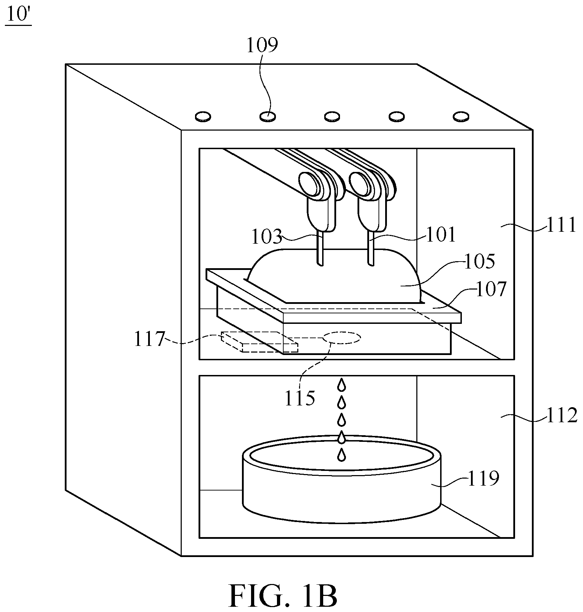

The multi-functional cooking device 10 includes a control panel 109 including a plurality of functional buttons or a touchscreen, and other non-contact technologies utilized to operate the multi-functional cooking device 10 are also included, e.g., intelligent voice control, capturing gestures of the user to operate through a camera, etc. The user is able to set the cooking modes (the oven mode, the microwave mode, the superheated steam oven mode, the air fryer mode, the pressure cooker mode, etc.) and cooking parameters (time, temperature, etc.) through the control panel 109 providing the user with one or more default cooking programs when being released by manufacturers, or providing a function of user programmable cooking programs which allow the user to set the cooking modes and the cooking programs, as shown in FIG. 1A and FIG. 1B.

The food capsule 105 is disposed in a space of the multi-functional cooking device 10, and the food capsule 105 can be disposed in a certain container 107. After the cooking modes are set, the embedded system of the multi-functional cooking device 10 then conducts cooking, through utilizing one or more cooking tools 101 and 103 according to the cooking program. For example, as shown in FIG. 1A and FIG. 1B, the cooking tools 101 and 103 can be arranged in the accommodating space of the multi-functional cooking device 10 through certain mechanisms, such that a rod structure (which can be hollow) of one or more of the cooking tools 101 and 103 can penetrate into the food capsule 105, and can be executed for one or more times according to actual requirements, or heat up and inject certain fluids into the food capsule 105 to cook.

The cooking tools 101 and 103 can be probes, e.g., heat conducting rods, which can accelerate the heating of food through penetrating the food capsule 105 and then the food inside. In addition, for ease of penetration and then of injecting fluid into the food capsule 105, the probes can be designed to be hollow.

Reference is made to FIG. 1B, which is a schematic view of the multi-functional cooking device in another embodiment of the present disclosure. A multi-functional cooking device 10' has a multilayer structure including a structure in which a container is disposed, and the container is utilized to receive residue generated after the food capsule 105 has been cooked.

As shown in FIG. 1A and FIG. 1B, for example, the multi-functional cooking device 10' includes two layers, a first layer 111 and a second layer 112, and a container 119 is disposed in the second layer 112. The container 119 can be utilized to receive the residue, such as soup or excess water, generated after the food capsule 105 is cooked, and the container 119 in the second layer 112 receives the residue through a channel or a mechanism.

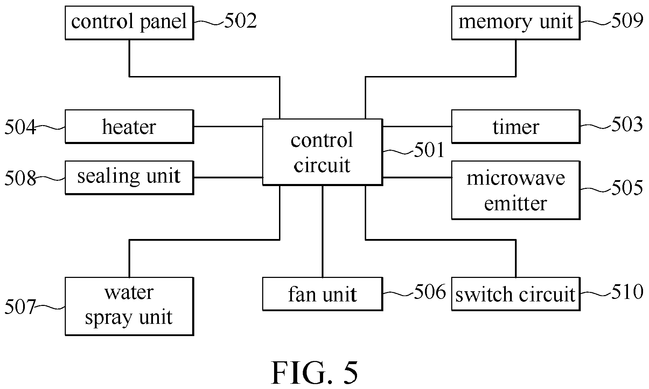

According to one embodiment, the channel or the mechanism that is utilized when receiving the residue can be a channel switch 115 as shown in FIG. 1B, and the structural design of the channel switch 115 can be implemented by a person having ordinary skill in the art according to an actual design of the multi-functional cooking device 10. The channel switch 115 can be controlled by a switch circuit 117 that is controlled by the embedded system of the multi-functional cooking device 10' (which can be referred to in FIG. 5), and a process that determines when to open the channel switch 115 can be conducted, such that the residue generated by cooking the food capsule 105 in the first layer 111 flows in the container 119 in the second layer 112. The process can be realized by the software executed by the embedded system of the multi-functional cooking device 10', so as to automatically determine a certain timing that allows the residue generated by cooking the food capsule 105 to flow in the container 119 in the second layer 112, and the process can also be realized manually.

In one embodiment, the channel switch 115 can have a certain structure, which is communicated with the container 107 in which the food capsule 105 is disposed in the first layer 111, disposed between the first layer 111 and the second layer 112 of the multi-functional cooking device 10', such that the residue can be guided to the container 119 of the second layer 112.

The cooking parameters utilized to determine whether or not the residue is generated through cooking the food capsule 105 includes temperature, pressure, and time, and the related sensors (temperature sensor, pressure sensor, etc.) and a timer can be disposed in the switch circuit 117. On the other hand, the related sensors and the timer can be electrical components connected to a control circuit (which can be referred to in FIG. 5) of the embedded system, and the embedded system can set a condition of the temperature, the pressure, and/or the time that the residue flows to the second layer 112, and the condition can also be customized for the user. When the condition is reached, the channel switch 115 on the bottom, the side, or a certain part of the first layer 111 is opened, such that the residue is able to flow to the container 119 of the second layer 112 through the first layer 111.

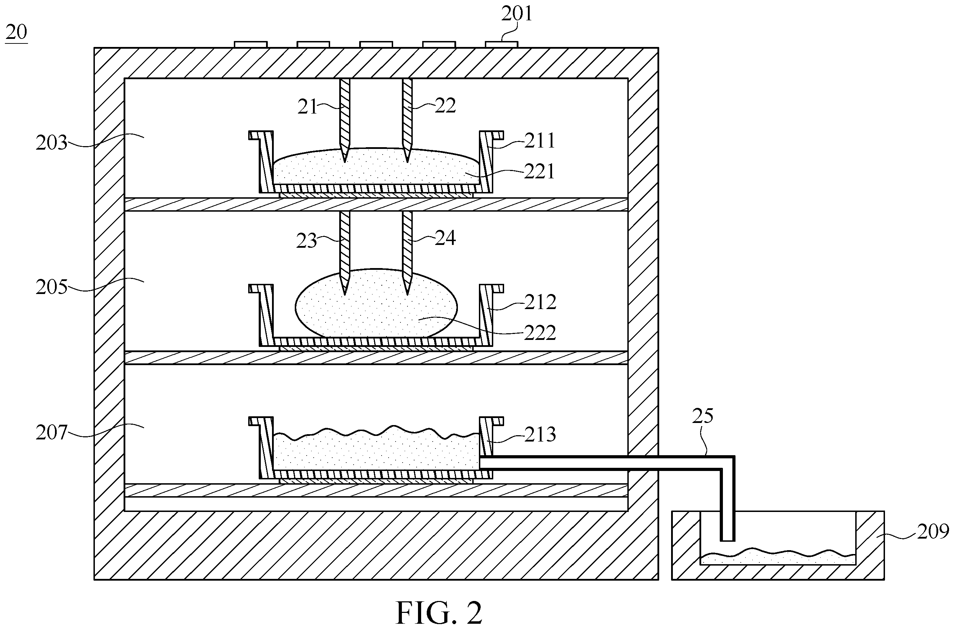

Reference is made to FIG. 2, which is a schematic view of the multi-functional cooking device in yet another embodiment of the present disclosure. A multi-functional cooking device 20 includes a control panel 201 utilized to set a variety of cooking modes, e.g., the oven mode, the microwave mode, the superheated steam oven mode, the air fryer mode, the pressure cooker mode, etc. that are mentioned above, corresponding cooking modules (the corresponding control circuits and cooking programs), ingredient characteristics, and the cooking parameters (time, temperature, etc.) set according to the user preference. As shown in FIG. 2, the accommodating space of the body of the multi-functional cooking device 20 includes the multilayer structure, which includes a first layer 203, a second layer 205, and a third layer 207, thereby realizing a plurality of steps of certain cooking processes. A quantity of layers as shown in FIG. 2 is merely an example, and the multi-functional cooking device 20 is not limited thereto.

The first layer 203, the second layer 205, and the third layer 207 are able to carry ingredients 221, a food capsule 222, or other required materials, respectively, and each of the layers is disposed with structures that cooperate with the software program to implement cooking tools 21, 22, 23, and 24. The cooking tools 21, 22, 23, and 24 that are in the shapes of probes, tubes or rods can be utilized to heat up food and inject water or certain fluids in the food capsule 222 according to the cooking modes, and can stir food through being driven by a motor.

Therefore, the cooking tools 21, 22, 23, and 24 can be utilized to heat up and cook the food and the ingredients in each of the layers. For example, firstly, the ingredients 221, which can be in a form of an instant food packet, can be disposed in the first layer 203 and carried by a first container 211, and after the ingredients 221 are processed (e.g., heated up, stirred, injected certain fluid inclusive of water, etc.) by the cooking tools 21 and 22 according to the set cooking programs, the ingredients 221 can further flow into a second container 212 of the second layer 205 in which the food capsule 222 is disposed. Secondly, the ingredients 221 and the food capsule 222 can be cooked under a certain cooking mode, such as injecting fluids or water into the food capsule 222, heating up, cooling and stirring, and injecting steam through the cooking tools 23 and 24. Lastly, a mixture of the ingredients 221 and the food capsule 222 that is cooked can be disposed in a third container 213 of the third layer 207, and the third container 213 of the third layer 207 can receive the food of the food capsule 222 that is cooked.

In one of the embodiments, when the food is cooked in the third layer 207 or a certain layer, a tube 25 can be utilized to guide the residue generated after cooking into a container 209, and a package of the food capsule and the container 209 that receives the residue is preferably made of recycled material.

References are made to FIG. 3 and FIG. 4. FIG. 3 is a schematic view of a food capsule in one embodiment of the present disclosure. A food capsule 30 is a container of food, which includes a penetrable package 301 (an outer layer), and food 303 and condiments 305 disposed therein. The food 303 and the condiments 305 can be separated before cooking, and then be mixed to each other when cooking through the cooking tools penetrating the food capsule 30. FIG. 4 is a schematic view of the food capsule in another embodiment of the present disclosure. A food capsule 40 includes a penetrable package 401, and only food 403 is filled inside.

The technology that the multi-functional cooking device 10 (shown in FIG. 1A), the multi-functional cooking device 10' (shown in FIG. 1B), or the multi-functional cooking device 20 (shown in FIG. 2) utilize to cook the food capsule 105 (shown in FIG. 1A) and the food capsule 222 (shown in FIG. 2) is a heating technology that integrates a plurality of electrical appliances together. For example, the technology of a heater of an oven that sets an amount of time for heating up the food capsule, the technology of a microwave emitter of a microwave that heats up the food with the microwave in the enclosed space of the multi-functional cooking device according to a set power, the technology of a superheated steam oven that heats up the food with high temperature steam in the enclosed space, the technology of an air fryer including components, e.g., a fan and a heater, for implementing the cooking of an air fryer, and the technology of a pressure cooker can be integrated in the multi-functional cooking device. The user is able to set the cooking modes through the control panel of the above-mentioned multi-functional cooking devices, including setting the cooking parameters of different cooking modes.

According to one embodiment of the present disclosure, a main body structure of the multi-functional cooking device includes a water storage component, an accommodating component, a water providing component, a heating component, and a penetrating component. The water storage component is utilized to accommodate water, the accommodating component is utilized to carry or affix the food capsule, the penetrating component, having a temperature sensing function, is a telescopic rod structure that is utilized to penetrate the food capsule, the water providing component provides water flowing into the food capsule through the penetrating component, and the heating component is utilized to heat up the water flowing through the water providing component.

Reference is made to FIG. 5, which is a block diagram of functional components in one embodiment of the present disclosure, and FIG. 5 is represented by the functional components implemented the circuits and the software programs. The circuit system includes a control circuit 501 that operates the multi-functional cooking device, and the control circuit 501 is electrically connected to other circuit components, and controls the circuit components to operate the software programs. The multi-functional cooking device includes a control panel 502 that is electrically connected to the control circuit 501, such that the user is able to set the cooking modes and the cooking parameters on an interface of the control panel 502, or that the user is able to program a cooking program through the interface, and store the user-programed cooking program in a random access memory (RAM) of the control circuit 501, which is a memory unit 509 as shown in FIG. 5.

The multi-functional cooking device further includes a timer 503 providing a timing function and controlling the cooking parameter of time in the cooking program. The multi-functional cooking device further includes a heater 504 heating or cooling the food capsule according to the cooking parameter of temperature in the cooking program through one or more cooking tools in the form of probes penetrating into the food capsule. The multi-functional cooking device further includes a microwave emitter 505 that emits microwave scattering in the accommodating space thereof, which heats water inside the food capsule, such that the multi-functional cooking device can cook the food capsule as a microwave.

The multi-functional cooking device further includes a fan unit 506 blowing high-temperature air into the accommodating space of the multi-functional cooking device, so as to cook food in a manner of an air fryer. The multi-functional cooking device includes a water spray unit 507 that generates high temperature steam to heat the food or the ingredients in the food capsule in a manner of a superheated steam oven. The multi-functional cooking device further includes a sealing unit 508 that serves as the accommodating component which can be a cover that seals the food capsule via a structural design, such that the multi-functional cooking device can conveniently cook the food or generate pressure in the accommodating space in a manner of a pressure cooker. The control circuit 501 is electrically connected to the above-mentioned circuit components, so as to realize the purpose of multi-functional cooking and integrating a plurality of conventional cooking technologies to cook food. The memory unit 509 is a storage of the multi-functional cooking device, in addition to storing commands and programs required for the operating programs, the memory unit 509 further includes the default cooking programs of the multi-functional cooking device as when released by the manufacturers and the user-programmed cooking programs.

The multi-functional cooking device further includes a switch circuit 510 that controls the channel switches among the layers of the multilayer structure of the multi-functional cooking device. The channel switches can be realized through certain channels or mechanisms, and a timing of the residue generated after cooking in an upper layer flowing into a lower layer can be determined through controlling whether or not to open the channel switches.

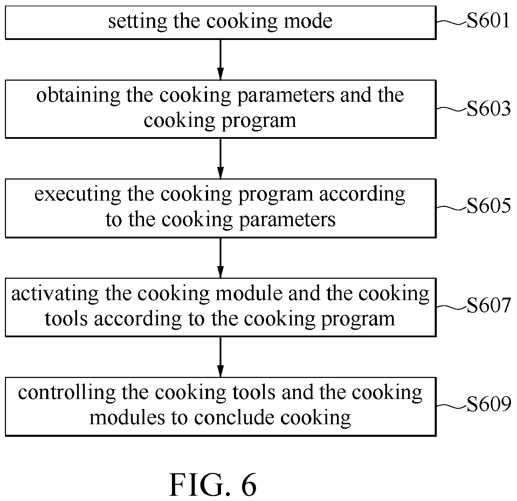

Reference is made to FIG. 6, which is a flowchart showing a method of operating the multi-functional cooking device in one embodiment of the present disclosure. As shown in FIG. 6, the cooking programs can be realized via the functions of the multi-functional cooking device and the functional components implementing the cooking modes. The cooking programs are executed by the software programs in the embedded system that is operating in the multi-functional cooking device, the related programs are stored in the memory unit 509 of the circuit system of the multi-functional cooking device, and the control circuit 501 executes the software programs of the cooking programs to implement the cooking modes such as one of the oven mode, the microwave mode, the superheated steam oven mode, the air fryer mode, the pressure cooker mode, and a combination thereof that are mentioned above.

In FIG. 6, firstly, in step S601, the cooking mode (one of the oven mode, the microwave mode, the superheated steam oven mode, the air fryer mode, the pressure cooker mode, and a combination thereof) is set by the user, and the cooking program can be selected from one of the default cooking programs, a user-programmed cooking program, or controlling the cooking modes of the functional components manually and arbitrarily.

Next, in step S603, a set of cooking parameters and the cooking programs that correspond to the set of cooking modes can be obtained by the control circuit (a control procedure) operating in the multi-functional cooking device, e.g., cooking steps and the cooking parameters (time, temperature, etc.), and in step S605, the cooking program is executed according to the cooking parameters.

Next, in step S607, the control procedure of the multi-functional cooking device activates the one or more cooking tools and the related functional components in the circuit system according to the cooking program (inclusive of the cooking parameters), and in step S609, the one or more cooking tools and the related functional components in the circuit system are controlled to cook the food capsule according to the cooking parameters, as the cooking modes of each of the cooking programs, thereby concluding the cooking process.

In conclusion, according to embodiments of the multi-functional cooking device and the food capsule of the present disclosure, the multi-functional cooking device integrates the cooking modules and the functional components into an all-in-one device, which provides the user with certain cooking modes (the oven mode, the microwave mode, the superheated steam oven mode, the air fryer mode, the pressure cooker mode, etc.) to conveniently cook food, and provides the cooking mode of a combination of the afore-mentioned cooking modes, which achieves the effect of completing innovative cuisines rapidly.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A multi-functional cooking device (10, 10', 20), which integrates a plurality of cooking functions through circuits, structures, and software programs that are implemented by an embedded system, **characterized in that** the multi-functional cooking device (10, 10', 20) comprising:
a body formed with an accommodating space for disposing a food capsule (105);
a main body structure including a water storage component, an accommodating component, a water providing component, a heating component, and a penetrating component, wherein the water storage component is utilized to accommodate water, the accommodating component is utilized to carry or affix the food capsule (105), the penetrating component is a telescopic rod structure that is utilized to penetrate the food capsule (105), the water providing component provides water flowing into the food capsule (105) through the penetrating component, and the heating component is utilized to heat up the water flowing through the water providing component;
one or more cooking tools (101, 103, 21, 22, 23, 24) that are disposed inside the body and that serve as the penetrating component for cooking food inside the food capsule (105); and
a circuit system, including:
a control circuit (501) utilized to control the multi-functional cooking device (10, 10', 20) to execute a plurality of cooking programs in the multi-functional cooking device (10, 10', 20);
a memory unit (509) electrically connected to the control circuit (501), the memory unit (509) being a storage of the multi-functional cooking device (10, 10', 20);
a control panel (109, 201) electrically connected to the control circuit (501), the control panel (109, 201) providing a selection of one or more default cooking programs, or providing a function of a plurality of user-programmable programs and storing the user-programmable cooking programs in the memory unit (509);
a heater (504) electrically connected to the control circuit (501), the heater (504) heating up the food capsule (105) through the one or more cooking tools (101, 103, 21, 22, 23, 24) penetrating inside the food capsule (105) according to a temperature of each of the cooking programs;
a microwave emitter (505) electrically connected to the control circuit (501), the microwave emitter (505) emitting microwaves scattering in the accommodating space to heat up the water in the food capsule (105);
a fan unit (506) electrically connected to the control circuit (501), the fan unit (506) blowing air at a high temperature inside the accommodating space to heat up the food in the food capsule (105);
a water spray unit (507) electrically connected to the control circuit (501), the water spray unit (507) generating water vapor at a high temperature to heat up the food in the food capsule (105) disposed in the accommodating space; and
a sealing unit (508) electrically connected to the control circuit (501), the sealing unit (508) serving as the accommodating component through sealing the food capsule (105) by a structural design and generating a pressure inside the accommodating space.

2. The multi-functional cooking device (10, 10', 20) according to claim 1, wherein the accommodating space has a multilayer structure, which is utilized to realize a plurality of steps in one of the cooking programs.

3. The multi-functional cooking device (10, 10', 20) according to claim 1, wherein each of the cooking programs are realized by the circuits, the structures of the multi-functional cooking device (10, 10', 20), and the embedded system, and the cooking modes includes one of an oven mode, a microwave mode, a superheated steam oven mode, an air fryer mode, and a pressure cooker mode, or a combination thereof.

4. The multi-functional cooking device (10, 10', 20) according to claim 3, wherein a program executing the cooking programs is stored in the memory unit (509), the cooking programs are controlled by the control circuit (501), and the program includes:
setting a cooking mode;
the control circuit (501) obtaining a set of cooking parameters and the cooking programs according to the cooking mode;
the control circuit (501) executing the cooking programs according to the set of cooking parameters;
activating the one or more cooking tools (101, 103, 21, 22, 23, 24) and corresponding ones of the water storage component, the accommodating component, the water providing component, the heating component, and the penetrating component in the circuit system; and
controlling the one or more cooking tools (101, 103, 21, 22, 23, 24) and corresponding ones of the water storage component, the accommodating component, the water providing component, the heating component, and the penetrating component to cook the food capsule (105), thereby concluding the cooking programs.

5. The multi-functional cooking device (10, 10', 20) according to claim 4, wherein the accommodating space has a multilayer structure, which is utilized to realize a plurality of steps in one of the cooking programs.

6. The multi-functional cooking device (10, 10', 20) according to claim 1, wherein the one or more cooking tools (101, 103, 21, 22, 23, 24) are utilized to penetrate inside the food capsule (105) to heat up or inject fluid.

7. The multi-functional cooking device (10, 10', 20) according to claim 6, wherein the accommodating space has a multilayer structure, which is utilized to realize a plurality of steps in one of the cooking programs.

8. The multi-functional cooking device (10, 10', 20) according to claim 7, wherein the multilayer structure includes a first layer (203) for disposing ingredients (211), a second layer (205) for disposing the food capsule (222), and a third layer (207) disposed with a container (213) for receiving the food in the food capsule (222) after being cooked.

9. The multi-functional cooking device (10, 10', 20) according to claim 8, wherein the multilayer structure further includes a structure in which another container (209) is disposed for receiving residue generated after the food capsule (222) is cooked.

10. The multi-functional cooking device (10, 10', 20) according to claim 9, wherein the container (213) and the another container (209) are made of a recycled material.

11. A food capsule (30, 40) utilized in the multi-functional cooking device (10, 10', 20) as claimed in claim 1, **characterized in that** the food capsule (30, 40) comprising:
a penetrable package (301, 401) in which food (303, 403), ingredients (221), or condiments (305) are disposed, the penetrable package (301, 401) being made of heat resistive material;
wherein a container (107) is disposed in the accommodating space of the multi-functional cooking device (10, 10', 20) when cooking, and the one or more cooking tools (101, 103, 21, 22, 23, 24) penetrate into the penetrable package (301, 401) and cook the food (303, 403) in the food capsule (30, 40).

12. The food capsule (30, 40) according to claim 11, wherein the food capsule (30, 40) includes food (303, 403) and an instant food packet, and the food (303, 403) is cooked through being heated once or through executing one of the cooking programs.

13. The food capsule (30, 40) according to claim 11, wherein the food capsule (30, 40) is realized through encapsulating the food (303, 403) into a food capsule (30, 40), and then the food capsule (30, 40) is mixed with other ingredients for cooking.

14. The food capsule (30, 40) according to claim 11, wherein the penetrable package (301, 401) is made of a penetrable aluminum foil.

15. The food capsule (30, 40) according to claim 11, wherein the penetrable package (301, 401) is made of a recycled material.
